# EUROPÄISCHE PATENTSCHRIFT

(11) **EP 2 192 400 B1**
(45) Veröffentlichungstag und Bekanntmachung des Hinweises auf die Patenterteilung: **20.10.2021**
(21) Anmeldenummer: 09175719.5
(22) Anmeldetag: 11.11.2009
(51) Int. Cl.: G01N 21/63

(54) **Optisches Auswertungsverfahren mittels Laserpulsen und Einrichtung hierzu**
Optical evaluation method by means of laser pulses and corresponding apparatus
Système de préparation d'un produit à base de poisson dans un micro-ondes

(30) Priorität: 28.11.2008 DE 102008059579
(43) Veröffentlichungstag der Anmeldung: 02.06.2010
(73) Patentinhaber: Leica Microsystems CMS GmbH, 35578 Wetzlar (DE)
(72) Erfinder: Krishnamachari, Vishnu Vardhan, 64625, Bensheim (DE); Hay, William, 64646, Heppenheim (DE); Seyfried, Volker, 69226, Nußloch (DE); Widzgowski, Bernd, 69221, Dossenheim (DE)
(74) Vertreter: Schaumburg und Partner Patentanwälte mbB

(56) Entgegenhaltungen:
- US-A1- 2006 066 848
- RITTWEGER ET AL: "Fluorescence depletion mechanisms in super-resolving STED microscopy", CHEMICAL PHYSICS LETTERS, ELSEVIER BV, NL, vol. 442, no. 4-6, 4 July 2007 (2007-07-04), pages 483-487, XP022142289, ISSN: 0009-2614, DOI: 10.1016/J.CPLETT.2007.06.017

## Beschreibung

Die Erfindung betrifft ein optisches Auswertungsverfahren mittels Laserpulsen sowie eine Einrichtung hierzu.

Es ist eine Vielzahl optischer Messverfahren bekannt, bei denen eine Probe mit Laserlicht aus verschiedenen Laserquellen wechselwirkt (Anregungslicht) und durch diese Wechselwirkung ein optisches Signal, z. B. Licht einer anderen Farbe bzw. Wellenlänge, Polarisation, Intensität o. ä. entsteht und das detektiert werden kann. Durch den ortsabhängigen Nachweis des Detektionslichts lassen sich derartige Verfahren unter anderem zur Bildgebung, z. B. in der Mikroskopie verwenden. Beispiele hierfür sind vor allem Verfahren, die die Frequenzverdopplung, Frequenzvervielfachung Summenfrequenzmischung, Differenzfrequenzmischung, Vierwellenmischung, CARS (Coherent anti-Stokes Raman Scattering), FM-CARS, OCT, stimulierte Fluoreszenz, stimulierte Raman-Streuung, d.h. Stimulated Raman Gain bzw. Stimulated Raman Loss etc. nutzen.

Aus Chem. Phys. Lett. 2007, 442, 483 - 487 ist ein optisches Auswertungsverfahren bekannt, bei dem der Effekt der stimulierten Fluoreszenz ausgenutzt wird. Fluoreszenzfarbstoffe werden hier zunächst durch einen ersten Laserpuls in einen angeregten Zustand gebracht. Wenn zeitnah, d.h. innerhalb weniger Nanosekunden ein zweiter Laserpuls einer geeigneten Wellenlänge eingestrahlt wird, wird dieser zweite Anregungslaserpuls durch die angeregten Farbstoffe verstärkt, und ein Detektionslicht entsteht, das allerdings aufgrund der gleichen Wellenlänge von dem Anregungslicht nur schwer zu unterscheiden ist. Auf einem geeigneten Detektor wird ein L 08091 E optisches Signal detektiert, das sich bei zeitnahem Eintreffen der beiden Laserpulse an der Probe von dem Signal unterscheidet, das entstünde, wenn die beiden Laserpulse nicht zeitnah an der Probe einträfen. Im konkreten Fall wird der erste Laserpuls bereits vor dem Detektor durch geeignete spektrale Filter unterdrückt, so dass ausschließlich der zweite Laserpuls sowie das zusätzlich generierte optische Signal am Detektor eintreffen. Um allein das gewünschte zusätzliche optische Signal zu erhalten, müsste man eine Messung mit erstem Anregungs-Laserpuls und eine Messung ohne ersten Anregungs-Laserpuls durchführen und die entsprechende Differenz bilden. Allerdings unterscheiden sich die beiden Messungen derart wenig (Größenordnung kleiner als 10⁻⁸), dass aufgrund des begrenzten dynamischen Bereichs der Detektoren oder von Detektionsrauschen etc. das gewünschte optische Signal nicht mehr sauber nachgewiesen werden kann. Daher wird in derartigen Fällen üblicherweise wie auch in der zitierten Publikation die bekannte Lock-in-Technik eingesetzt, mit dessen Hilfe das gewünschte Signal noch vom Untergrund getrennt werden kann.

Ein Nachteil dieser Lock-in-Technik ist jedoch die begrenzte Geschwindigkeit, die insbesondere für bildgebende Verfahren wie Laser-Scanning-Techniken einen deutlichen Nachteil darstellt. Insbesondere beim Einsatz in der Laser-Scanning-Mikroskopie, bei der Bildraten von bis zu 25 Frames/Sekunde bei Bildgrößen von 512×512 Pixel üblich sind, wobei für einzelne Pixel dann nur Zeiten deutlich unter 1 Mikrosekunde zur Verfügung stehen, würde der Einsatz dieser Technik zu einer deutlichen Verlangsamung der Bildaufnahme führen, die zumindest für die Untersuchung von Prozessen in lebenden Zellen nicht akzeptabel ist.

US 2006/006684 A1 beschreibt ein CARS-System (CARS = Cohärente Anti-StokesRaman-Streuung), wobei infolge CARS-Wechselwirkung in der Probe Pulse ohne Anregung und mit Anregung entstehen, deren Differenz für die Molekülspetroskopie ausgewertet wird.

Es ist Aufgabe der Erfindung, ein optisches Auswertungsverfahren und eine Einrichtung anzugeben, das bzw. die die Nachteile des Stande der Technik behebt.

Diese Aufgabe wird durch die Merkmale der unabhängigen Ansprüche gelöst. Vorteilhafte Weiterbildungen sind in den abhängigen Ansprüchen angegeben.

Die vorliegende Erfindung löst das gegebene Problem für den Fall, dass das zu detektierende optische Signal durch Wechselwirkung der Probe mit Laserpulsen mindestens zweier unterscheidbarer Arten wechselwirkt, wobei das für den Nachweis gewünschte optische Signal nur dann entsteht, wenn das Eintreffen der beiden Arten Anregungspulse in einem bestimmten zeitlichen Zusammenhang steht, z. B. indem die beiden Pulse zeitgleich oder zeitnah an der Probe eintreffen, oder einen bestimmten vorherbestimmten zeitlichen Abstand haben (zeitkorrelierte Pulse). Beispiele hierfür sind z. B. Summenfrequenzmischung und Differenzfrequenzmischung, bei denen das Detektionslicht eine andere Wellenlänge besitzt als das Anregungslicht. Andere Beispiele sind CARS, stimulierte Fluoreszenz und stimulierte Raman-Streuung, bei denen ebenfalls zwei oder mehr Laserpulse zeitgleich oder zeitnah mit der Probe wechselwirken, wobei nicht notwendigerweise alle diese Laserpulse von der Probe absorbiert werden - in den letzteren Fällen werden sogar Pulse durch die Probe verstärkt, so dass das Detektionslicht von dem Anregungslicht nicht zu unterscheiden ist und nur durch eine Verstärkung des Anregungslichts nachweisbar ist. Der Einfachheit halber soll aber in diesem Zusammenhang immer dann von Anregungspulsen geredet werden, wenn die Wechselwirkung der beiden Pulse mit der Probe zum gewünschten optischen Signal führt, selbst wenn der zweite Anregungspuls wie im Fall von stimulierter Fluoreszenz oder stimulierter Raman-Streuung aus spektroskopischer Sicht eher Abregungs- als Anregungspuls genannt werden könnte.

Die vorliegende Erfindung geht von der Überlegung aus, für die Anregungspulse der beiden Arten mit Hilfe eines geeigneten optischen Aufbaus Pulssequenzen bereitzustellen, in denen die Pulse der beiden Arten einerseits teilweise gleichzeitig oder zeitnah oder zeitkorreliert an der Probe auftreffen und andererseits teilweise auch eben nicht gleichzeitig oder zeitnah oder zeitkorreliert auftreffen. Mit diesem Aufbau und der zugehörigen Detektion auf einem, zwei oder mehreren Detektoren samt anschlie-βender Differenzbildung in einer geeigneten Anordnung ist es möglich, bereits ohne Anwendung der auf diesem Gebiet häufig eingesetzten Lock-in-Technik die gewünschte Signalgüte zu erzielen. Explizit nicht ausgeschlossen werden soll jedoch hier, dass die Lock-in-Technik dennoch zusätzlich zu einer weiteren Signalverbesserung eingesetzt wird.

In einem typischen erfindungsgemäßen Aufbau setzt man z. B. zwei zeitlich synchronisierte Pulslaser unterschiedlicher Eigenschaften (z. B. anderer Wellenlänge oder Polarisation) mit unterschiedlicher Repetitionsrate ein. Beispielsweise hat der eine der beiden Laser die halbe Repetitionsrate des anderen Lasers, was man gegebenenfalls durch Halbierung der Repetitionsrate, z.B. mit Hilfe eines Pulspickers, realisiert. Dadurch wird erreicht, dass nur zu jedem zweiten Puls des Lasers mit der höheren Repetitionsrate auch ein Puls des anderen Lasers gehört. Dadurch enthält nur bei jedem zweiten Mal das entstehende optische Signal den gesuchten Beitrag, der durch die Differenzbildung mit den jeweils anderen, dazwischen liegenden Pulsen extrahiert wird. Hierzu wird z. B. das elektronische Signal, z.B. der Strom der beiden Detektoren, in zwei Arme aufgeteilt, der Strom in einem der beiden Arme entsprechend verzögert und dann elektronisch die Differenz gebildet, z. B. durch gegentaktige Schaltung oder Differenzschaltung der Detektoren. Dadurch erhält man ein in seinem Vorzeichen wechselndes Signal, das ausschließlich die gewünschte Information enthält und geeignet weiterverarbeitet werden kann.

Eine bevorzugte Variante ist, dieses Signal durch Multiplikation mit einem sein Vorzeichen wechselnden Digitalsignal gleichzurichten, evtl. mit einem angepassten Tiefpass zu filtern und anschließend zu digitalisieren.

Um geeignete Pulssequenzen der mindestens zwei Anregungslaser zu erzeugen, gibt es eine Vielzahl von Möglichkeiten. Hierzu können beispielsweise die beiden Laser geeignet elektronisch getriggert werden. Handelt es sich jedoch um passiv modengekoppelte Laser oder andere Laser, die nicht getriggert werden können, muss die Synchronisierung der Laserpulse auf andere Weise realisiert werden. Beispielsweise sind Mechanismen, mit denen auch zwei passiv modengekoppelte Laser synchronisiert werden können, z. B. als Synchrolock bekannt. Eine andere Möglichkeit stellt die Nutzung des einen Lasers als Pump-Quelle für den anderen dar, wie es z. B. bei synchron gepumpten Lasern oder optisch parametrischen Oszillatoren (OPO) realisiert wird. Auch eine Superkontinuumserzeugung mit breitem Wellenlängenspektrum mit der gleichen Pump-Quelle und anschließender Ausfilterung zweier Wellenlängen und/oder Benutzung der Pump-Wellenlänge gemeinsam mit den erzeugten Wellenlängen führt zu einer geeigneten Synchronisierung.

Auf jeden Fall müssen nun aber die geeigneten Pulssequenzen erzeugt werden, bei denen zu bestimmten Zeiten die beiden Laserpulse zeitgleich, synchronisiert zeitnah oder zeitkorreliert auftreten und zu bestimmten Zeiten diese Bedingung eben gerade nicht erfüllt wird. Hierzu ist es beispielsweise möglich, die Repetitionsraten der beiden Laser so einzustellen, dass die Repetitionsrate des einen Lasers ein ganzzahliges Vielfaches der Repetitionsrate des anderen Lasers ist. Bei geeignetem zeitlichem Abgleich der Laser ist dann gewährleistet, dass z. B. bestimmte Pulse aus dem einen Laser zeitgleich mit oder zeitnah zu Pulsen aus dem zweiten Laser an der Probe eintreffen, während bei anderen Pulsen des ersten Lasers kein Puls aus dem zweiten Laser an der Probe anliegt. Dadurch sind im entstehenden optischen Signal sowohl zeitliche Abschnitte mit dem erwünschten Signal als auch zeitliche Abschnitte ohne das erwünschte Signal zu finden, so dass durch eine geeignete Weiterverarbeitung durch analoge Differenzbildung das gesuchte Signal untergrundfrei ermittelt werden kann. Es ist hierfür nicht unbedingt notwendig, dass die beiden Repetitionsraten ganzzahlige Vielfache voneinander sind, auch kleine rationale Vielfache ermöglichen eine ähnliche Signalauswertung. So kann man beispielsweise, wenn das Verhältnis der Repetitionsraten 2:3 gewählt wird, nach jedem dritten Puls des ersten bzw. jedem zweiten Puls des zweiten Lasers ein zeitgleiches oder zeitnahes Auftreffen der Pulse an der Probe erreichen, so dass auch hier eine entsprechende Auswertung möglich ist.

Wie in den Ausführungsbeispielen veranschaulicht, ist auch eine äquidistante Pulsabfolge nicht unbedingt nötig. Stattdessen sind beispielsweise Doppelpulse etc. zumindest bei einem der beiden Laser durchaus vorteilhaft. Wichtig ist nur, dass es bei Einstrahlen der Pulssequenzen aus den beiden Lasern sowohl Zeitpunkte oder Zeitabschnitte gibt, bei denen die Pulse aus den beiden Lasern zeitgleich oder zeitnah an der Probe eintreffen und an denen das erwünschte Signal (samt Untergrund) erzeugt wird und Zeitpunkte bzw. Zeitabschnitte, an denen aufgrund der nicht zeitrichtig eintreffenden Laserpulse das erwünschte Signal nicht erzeugt wird (also nur der Untergrund), so dass später mit Hilfe einer geeigneten Differenzbildung bereits vor der Digitalisierung das erwünschte Signal extrahiert werden kann.

Besonders vorteilhaft ist es natürlich, wenn die Pulssequenzen so gewählt werden, dass in den beiden Teilsignalen, die voneinander subtrahiert werden, die Intensität des Untergrundsignals gleich groß ist, so dass das Untergrundsignal bei der Differenzbildung automatisch vollständig verschwindet. Allerdings reicht es in bestimmten Situationen vollständig aus, dass das Intensitätsverhältnis der Untergrundsignale in den beiden Teilsignalen zeitlich konstant ist, da dann z. B. durch eine geeignete elektronische Schaltung zur Abschwächung oder Multiplikation eines der beiden Teilsignale ebenfalls die Bedingung der gleichen Intensität des Untergrunds in beiden Teilsignalen erreicht werden kann.

Zur Erzeugung der geeigneten Pulssequenzen ist es wie gesagt möglich, zwei synchronisierte Laser mit bereits den richtigen Puls-Repetitionsraten einzusetzen. In vielen Fällen ist es jedoch besonders vorteilhaft, als Ausgangspuls zwei Laser mit der gleichen Repetitionsrate zu wählen, z. B. zwei synchronisierte Titan-Saphir-Laser oder einen Laser, der zugleich als erster Laser eingesetzt wird, aber andererseits als Pumpquelle für den zweiten Laser dient, so dass automatisch erster und zweiter Laser die gleiche Repetitionsrate besitzen. Beispiele hierfür sind Faserlaser zusammen mit einem durch diese Faserlaser gepumpten Kristall oder einer Superkontinuumsfaser, Pumpquellen zusammen mit den von ihnen gepumpten Optisch Parametrischen Oszillatoren (OPO) etc. Auch der gemeinsame Einsatz von Signal- und Idler-Licht eines OPOs ist möglich. Allen diesen beschriebenen Laserpaaren ist gemeinsam, dass sie dieselbe Repetitionsrate besitzen. Um nun hieraus zu den erforderlichen Laserpulssequenzen zu gelangen, muss die Pulsabfolge zumindest eines der beiden Laserzweige modifiziert werden. Dies kann beispielsweise durch einen Pulspicker erfolgen, mit dessen Hilfe die Repetitionsrate eines oder beider Laser reduziert wird. Andererseits ist es auch möglich, in einem oder beiden Laserzweigen durch Strahlteilung und Neuzusammenführung der Strahlen zusätzliche Pulse an beliebigen zeitlichen Stellen zu erzeugen und so die erfindungsgemäßen Pulssequenzen zu erzeugen.

Von besonderem Vorteil ist es, wenn sich im Innern der jeweiligen Laserpulssequenzen eines der beiden Laser diejenigen Einzelpulse, die einen "Partner" in der Laserpulssequenz des anderen Lasers besitzen, durch spezifische optischen Eigenschaften gegenüber den restlichen Laserpulsen auszeichnen, z. B. durch eine geänderte Polarisation, eine geänderte Wellenlänge oder evtl. sogar eine andere Richtung. In diesem Fall ist es nämlich möglich, die unterschiedlichen Anteile des erzeugten optischen Signals später durch geeignete Mittel zu trennen (z. B. Polarisationsfilter bzw. Farbteiler oder räumliche Separatoren) und so mit Hilfe mehrerer Detektoren die unterschiedlichen Anteile des Signals getrennt zu detektieren, was die nachgeordnete elektronische Auswertung erleichtert.

Auf jedem Fall entstehen schließlich an einem oder mehreren Detektoren elektronische Signale, die sowohl zeitliche Abschnitte mit dem erwünschten Signal (samt Untergrund) als auch Abschnitte ohne das erwünschte Signal besitzen (also nur Untergrund). Sofern diese Signalanteile an unterschiedlichen Detektoren nachgewiesen werden ist eine elektronische Subtraktion nach einer evtl. vorhergehenden Amplitudenanpassung (wegen Unterschieden z. B. in der Sensitivität der Detektoren oder der Beschaltung) und einer geeigneten zeitlichen Verzögerung einfach. Aber auch bei Detektion mit Hilfe eines einzigen Detektors ist eine entsprechende elektronische Auswertung durchaus möglich. Allerdings muss hier das Signal zeitverschoben von sich selbst abgezogen werden, so dass auch hier der Untergrund schon vor der weiteren Auswertung unterdrückt wird. Dies wird in den Ausführungsbeispielen detaillierter erläutert.

Die beschriebene Vorgehensweise eignet sich besonders gut zur untergrundfreien Detektion von Signalen, wenn die Prozesse der Frequenzverdopplung, Frequenzvervielfachung Summenfrequenzmischung, Differenzfrequenzmischung, Vierwellenmischung, CARS, FM-CARS, OCT, stimulierten Fluoreszenz, stimulierten Raman-Streuung, d.h. Stimulated Raman Gain bzw. Stimulated Raman Loss etc. zur Bildgebung in scannenden Systemen wie Laserscanning-Mikroskopen, Konfokalmikroskopen, etc. genutzt werden. In den folgenden Ausführungsbeispielen wird die Technik an den Beispielen der stimulierten Fluoreszenz sowie den beiden Raman-Techniken Stimulated Raman Gain und Stimulated Raman Loss in bildgebenden Laserscanning-Mikroskopen detailliert erläutert. Die Übertragung auf die entsprechenden anderen benannten Techniken und entsprechende weitere ist natürlich sinngemäß möglich.

Ausführungsbeispiele der Erfindung werden anhand der Zeichnungen erläutert. Darin zeigt
- Figur 1: eine Einrichtung nach einem ersten Ausführungsbeispiel, bei dem die stimulierte Fluoreszenz ausgenutzt wird,
- Figur 2: dazugehörige Signalverläufe,
- Figur 3: ein Beispiel mit zeitgleichen ersten Laserpulsen und zweiten Laserpulsen und die Erzeugung von Zwischenpulsen durch eine Polarisationseinrichtung,
- Figur 4: zugehörige Signalverläufe,
- Figur 5: ein weiteres Beispiel mit zeitgleichen ersten und zweiten Laserpulsen, und
- Figur 6: zugehörige Signalverläufe.

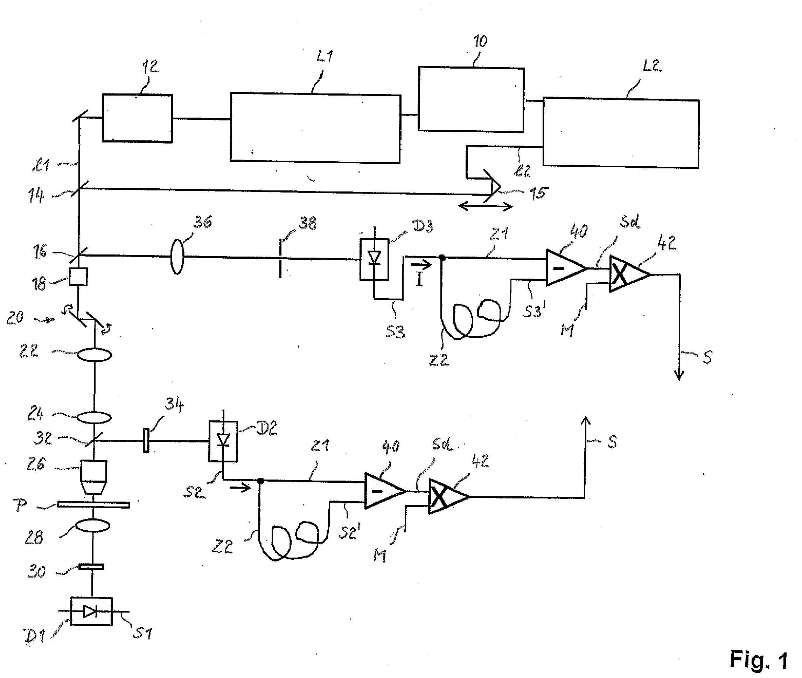

Beim Ausführungsbeispiel nach Figur 1 wird der physikalische Effekt der stimulierten Fluoreszenz ausgenutzt. Bei dieser stimulierten Fluoreszenz handelt es sich um einen photophysikalischen Prozess, bei dem Fluoreszenzmoleküle in einer Probe P durch einen ersten anregenden Laserpuls 11 in einen energiereicheren Zustand versetzt werden. Wenn ein zweiter Laserpuls 12 geeigneter Wellenlänge, vorzugsweise mit einer Wellenlänge der Fluoreszenzstrahlung, zeitnah, d. h. innerhalb eines kurzen zeitlichen Abstands, z.B. von wenigen Nanosekunden oder Pikosekunden, nach dem ersten Laserpuls 11 an der Probe P eintrifft, so kann der Prozess der stimulierten Fluoreszenz stattfinden. Dies bedeutet, dass der zweite Laserpuls 12 die in der Probe P aufgrund des ersten Laserpulses 11 vorhandene überschüssige Energie mit nutzen kann und der zweite Laserpuls 12 um einen bestimmten Energieanteil verstärkt die Probe P verlässt. Bei Ausschalten des ersten Laserpulses 11 bzw. bei zu großem zeitlichen Abstand der beiden Laserpulse 11, 12 findet hingegen diese Verstärkung nicht statt. Ein Detektor, der nur die Wellenlänge des zweiten Laserpulses 12 detektiert, misst im ersten Fall ein geringfügig höheres Signal als im zweiten Fall. Mit Hilfe der erfindungsgemäßen Einrichtung bzw. des zugehörigen Verfahrens lassen sich die entsprechenden Signalunterschiede ausreichend genau detektieren, so dass die Größe der Verstärkung bzw. der Überschuss an Strahlung frei von Untergrund- und Störstrahlung ermittelt werden kann und direkt als lokaler Probenparameter für die Bildgebung zur Verfügung steht. Das Beispiel nach Figur 1 kann auch für andere Arten der Lumineszenz verwendet werden, beispielsweise der Phosphoreszenz, wobei dann der zeitliche Abstand der Laserpulse größer zu wählen ist, beispielsweise im Mikro- oder Millisekundenbereich.

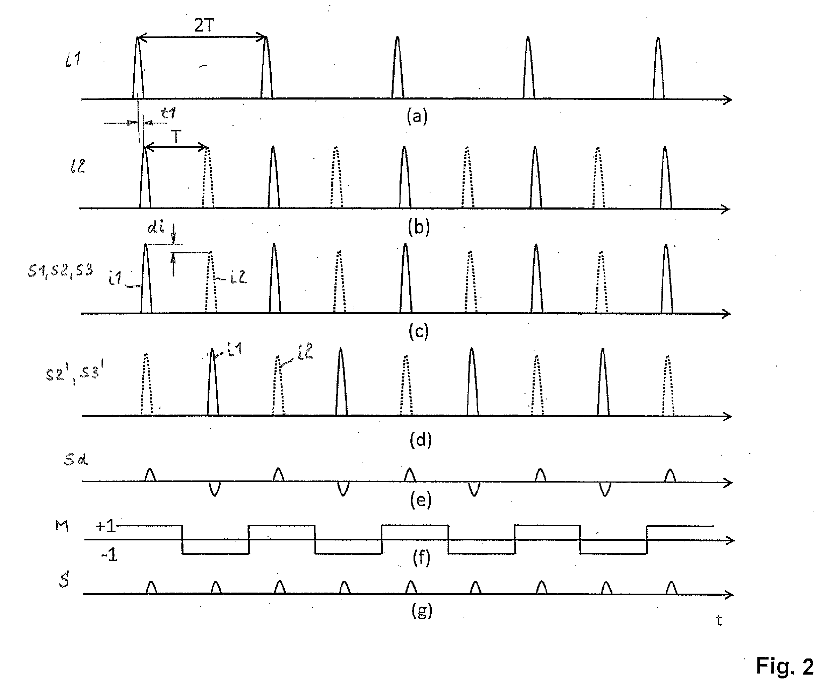

In Fig. 1 ist eine Einrichtung unter Verwendung eines Laserscan-Mikroskops für die Bildgebung mittels stimulierter Fluoreszenz dargestellt. In Figur 2 sind zugehörige Signalverläufe dargestellt, auf die bei der nachfolgenden Beschreibung Bezug genommen wird. Laserpulse 11, 12 erster und zweiter Art besitzen hier eine unterschiedliche Wellenlänge und werden mittels zweier synchronisierter Laser, nämlich ein erster Laser L1, auch als Anregungslaser (engl. excitation laser) bezeichnet, und ein zweiter Laser L2 (engl. probe laser), mit gleicher Repetitionsrate erzeugt. Zur Synchronisation der Laser L1, L2 dient eine Synchronisationseinrichtung 10. Die Repetitionsrate des ersten Lasers L1 wird mit Hilfe eines Pulspickers 12 halbiert und als Laserpulse 11 ausgegeben. Danach werden die beiden Laserstrahlen mit Laserpulsen 11, 12 in einem Strahlteiler 14, vorzugsweise ein dichroitischer Strahlteiler, vereint. Demgemäß liegt danach ein kollinearer Strahl vor, der Laserpulse 11 des ersten Lasers L1 mit der halben Repetitionsrate gemäß Fig. 2a mit doppeltem Zeitabstand 2T und Laserpulse 12 des zweiten Lasers L2 mit der vollen Repetitionsrate gemäß Fig. 2b mit Zeitabstand T enthält.

Durch eine einstellbare optische Verzögerungstrecke 15 (engl.delay stage) wird gewährleistet, dass später an der Probe P der zweite Laserpuls 12 des zweiten Lasers L2 jeweils abwechselnd mit und ohne den anderen, zeitlich um eine Verzögerungszeit t1, z.B. weniger als eine Nanosekunde, vorausgehenden ersten Laserpuls 11 des ersten Lasers L1 eintrifft. Das an einem Detektor D1 gemessene Signal S1 gemäß Fig. 2c hat abwechselnd die Intensität il des durch die stimulierte Fluoreszenz verstärkten um den Betrag di erhöhten zweiten Laserpulses 12 bzw. die Intensität i2 des nicht verstärkten zweiten Laserpulses 12.

Nach der Vereinigung der beiden Laserstrahlen im Strahlteiler 14 durchläuft das Licht der beiden Laser L1, L2 einen Hauptstrahlteiler 16, gelangt über Zwischenoptiken, wie z. B. ein stellvertretend für verschiedene Optikelemente dargestelltes Strahlaufweitungs-Teleskop 18 (engl. Beam-Expander-Teleskop), auf die Scanspiegel 20 des konfokalen Laserscan-Mikroskops und wird nach Scanocular 22 und Tubuslinse 24 über ein Mikroskop-Objektiv 26 auf die Probe P gerichtet. Je nachdem, ob zum zweiten Laserpuls 12 als Partner ein erster Laserpuls 11 mit stimulierter Fluoreszenz gehört, wird der zweite Laserpuls 12 in seiner Intensität verstärkt oder nicht. Das durch die Probe P dringende Laserlicht wird in einem Kondensor 28 des Mikroskops kollimiert, durch einen Farb-Sperrfilter 30 geleitet, der das Licht des ersten Lasers L1 unterdrückt und mittels des Detektors D1 nachgewiesen.

Neben dem durch die Probe P hindurchtretenden Licht kann wahlweise oder zusätzlich auch das von der Probe P zurückgestreute Licht zur Detektion verwendet werden. Hierzu befindet sich zwischen Tubuslinse 24 und Objektiv 26 ein motorisiert einschwenkbarer Strahlteiler 32, der im in den Strahlengang eingeschwenkten Zustand einen Teil des zurückgestreuten Lichts aus dem Hauptstrahlengang auskoppelt und nach Ausfiltern des Lichts des ersten Lasers L1 mittels Farb-Sperrfilter 34 auf einen weiteren Detektor D2 richtet.

Ist der motorisierte Strahlteiler 32 aus dem Strahlengang ausgeschwenkt, so durchläuft das rückgestreute Licht rückwärts Tubuslinse 24, Scanlinse 22, Scanspiegel 20, Zwischenoptik 18 und wird über den Hauptstrahlteiler 16 des Mikroskops in Richtung der Pinhole-Linse 36 des Konfokalmikroskops geleitet, welche das Licht auf ein konfokales Pinhole 38 richtet, dem dann ebenfalls eine Detektoreinheit D3 mit vorgeschalteten Filtern oder eine spektrale Detektoreinheit (nicht dargestellt) nachgeordnet ist.

Unabhängig davon, ob sich der Detektor D1, D2, D3 hinter der Probe P, vor der Probe P oder nach dem Detektionspinhole 34 des Mikroskops befindet, ist jedoch immer wesentlich, dass am Detektor D1, D2, D3 zweite Laserpulse 12 eintreffen (siehe hierzu Fig. 2c), die abwechselnd verstärkt (il) und nicht verstärkt (i2) sind. Entsprechend können an diesen Stellen ähnliche oder gleiche Detektoreinheiten mit ähnlicher oder gleicher Auswertung verwendet werden, deren verschiedene Varianten in diesem und in den folgenden Ausführungsbeispielen beschrieben werden.

Vorzugsweise handelt es sich bei den Detektoren D1, D2, D3 um mit Vorspannung betriebene Fotodioden oder unterhalb der Durchbruchspannung betriebene Avalanche-Dioden bzw. Fotomultiplier im linearen Betrieb. Die bei Fotodioden benutzte Vorspannung dient hierbei vor allem zur Erhöhung der Ansprechgeschwindigkeit der Detektoren. Entsprechend sind auch kleine aktive Detektionszonen von Vorteil, wobei andererseits natürlich auch der Größe des zu detektierenden Lichtflecks Rechnung getragen werden muss. Das am Detektor D1, D2, D3 in ein elektrisches Signal S1, S2, S3 gemäß Fig. 2c umgewandelte optische Signal wird nun beim Detektor D2 und Detektor D3 jeweils in zwei Zweige Z1, Z2 aufgespalten, von denen der eine Zweig Z2 das Signal S2 bzw. S3 gegenüber dem Signal S2 bzw. S3 im anderen Zweig Z1 elektronisch gerade um eine Pulswiederholzeit T verzögert und die Signale S2' und S3' erzeugt werden (siehe hierzu Fig. 2d). Durch elektronische Differenzbildung zwischen dem Signal S2 bzw. S3 und dem verzögerten Signal S2' bzw. S3' in einem Differenzierglied 40 erhält man nun ausschließlich ein Differenz-Signal Sd entsprechend der Intensität der interessierenden stimulierten Fluoreszenz, allerdings mit alternierendem Vorzeichen gemäß Fig. 2e. Durch Gleichrichtung dieses Signals Sd, vorzugsweise durch elektronische Multiplikation mit einem alternierenden Maskensignal M (Fig. 2f), erhält man am Ausgang eines Multiplizierglieds 42 schließlich ein Signal S entsprechend der positiven Intensität der interessierenden stimulierten Fluoreszenz (Fig. 2g), welches dann beispielsweise über einen Ladungsverstärker oder schnelle Analog-Digital-Wandler letztendlich digitalisiert und weiterverarbeitet wird. Durch Zuordnung der Signale S entsprechend den gemessenen Intensitäten in Abhängigkeit der Position der Scanspiegel 20 zu Abtastpunkten auf der Probe P läßt sich als Ergebnis eine _{"}Landkarte" der Probe P im Hinblick auf die jeweilige stimulierte Fluoreszenz erstellen und somit die Technik der stimulierten Fluoreszenz zur mikroskopischen Bildgebung nutzen.

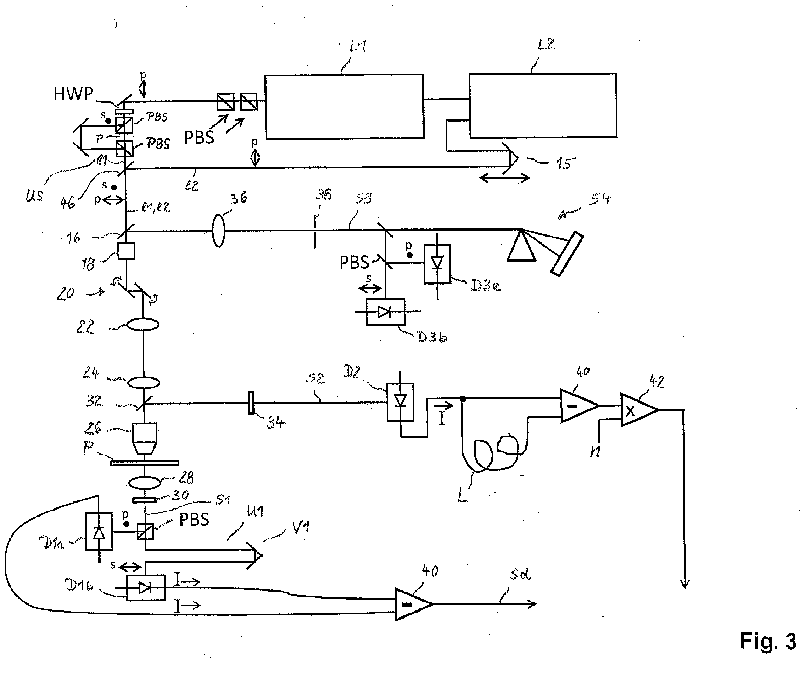

Fig. 3 zeigt ein anderes Beispiel mit einem anderen Aufbau, bei dem das erfindungsgemäße Verfahren auf ähnliche Weise zur Bildgebung bei stimulierter Raman-Streuung eingesetzt wird, hier exemplarisch am Beispiel des "Stimulated Raman Loss" diskutiert. Gleiche Teile wie in den vorhergehenden Figuren werden hier und nachfolgend gleich bezeichnet.

Bei "Stimulated Raman Loss" und auch beim weiter unten behandelten "Stimulated Raman Gain" handelt es sich um einen mit der zuvor beschriebenen stimulierten Fluoreszenz verwandten Prozess, allerdings ist hier das simultane, d. h. zeitgleiche Eintreffen der Laserpulse 11, 12 an der Probe P erforderlich. Im Fall des "Stimulated Raman Gain" wird wie bei der stimulierten Fluoreszenz eine Verstärkung des zweiten Laserpulses 12 beobachtet, wenn zeitgleich auch der erste Laserpuls 11 an der Probe P anliegt. Im Fall des "Stimulated Raman Loss" hingegen wird bevorzugt der erste Laserpuls 11 detektiert. Bei gleichzeitiger Anwesenheit des zweiten Pulses 12 wird der erste Laserpuls 11 um einen geringen Betrag abgeschwächt, da der zweite Laserpuls 11 dem ersten Laserpuls 11 einen Teil seiner Intensität wegnimmt.

Bei der Einrichtung nach Figur 3 zur Ausnutzung des "Stimulated Raman Loss" für eine Bildgebung in Verbindung mit einem Laserscan-Mikroskop wird als erster Laser L1 eine Laserlichtquelle verwendet, die das in einem Optisch Parametrischen Oszillator (OPO) erzeugte Licht einer Wellenlänge im Bereich von 600nm-1000nm verwendet. Der zweite Laser L2 verwendet als Laserlichtquelle das Pumplicht bei 1064 nm, das den ersten Laser L1, d.h. den OPO pumpt (OPO pump laser). Insofern sind die beiden Laser L1, L2 synchronisiert und haben die gleiche Repetitionsrate T.

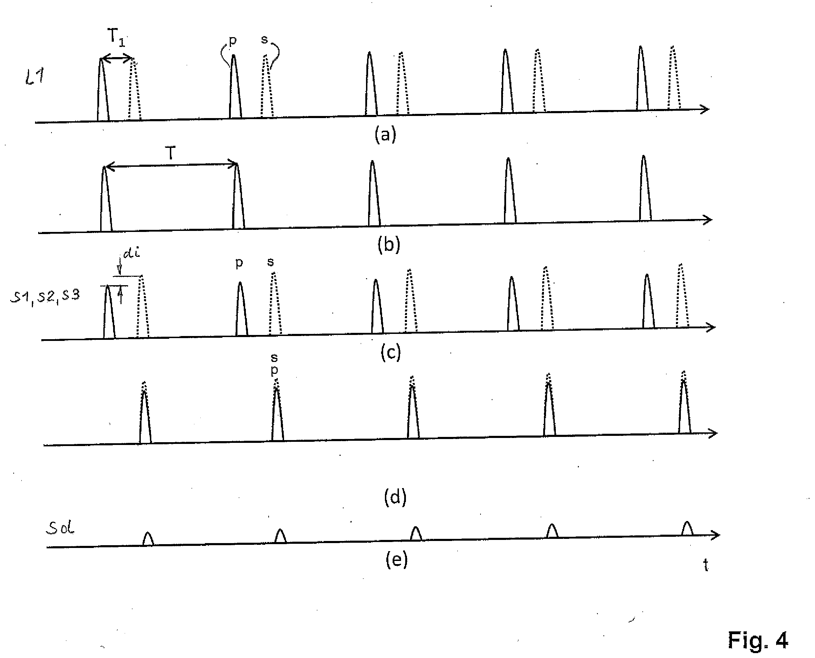

Beim vorliegenden Beispiel nach den Figuren 3 und 4 wird eine andere Vorgehensweise gewählt als beim Beispiel nach Figuren 1 und 2. Anstatt die Repetitionsrate des zweiten Lasers L2 zu halbieren, werden hier zusätzliche Laserpulse in die Pulssequenz des ersten Lasers L1 eingefügt. Dies geschieht durch eine Strahlteilung mit Umwegstrecke und anschließende Wiedervereinigung der Pulse. Vorzugsweise wird zunächst das Licht aus dem Laser L1 mit einer Sequenz aus Polarisationsfiltern PBS (PBS = polarization beam splitter) möglichst gut linear polarisiert, so dass das Licht die zu einer Referenzebene parallele Polarisationsrichtung p hat. Mit Hilfe einer motorisierten Lambda-Halbe-Platte HWP (HWP=half wave plate) wird die Polarisation des Lichts dann auf 45° relativ zur Referenzebene, z.B. zur Tischebene gedreht. Dadurch erreicht man mit einem nachfolgenden Polarisationsstrahlteiler PBS eine hälftige Aufspaltung des Lichts in die beiden Haupt-Polarisationsrichtungen, nämlich parallel p und senkrecht s zur Referenzebene. Das Licht der einen Polarisationsrichtung wird über eine Umwegstrecke US zwecks zeitlicher Verzögerung geführt und anschließend über einen weiteren Polarisationsstrahlteiler PBS als Polarisationsvereiner mit dem anderen Teilstrahl vereint. Zur Erzeugung vergrößerter zeitlicher Verzögerungen kann die Umwegstrecke US auch eine Glasfaser vorbestimmter Länge, z.B. mit mehreren Metern Länge, beinhalten. Die Folge von Laserpulsen 11 des ersten Lasers L1 besteht nach dem Durchlaufen des Polarisationsvereiners aus den ursprünglichen Pulsen mit p-Polarisation sowie um T1 verzögerten Pulsen mit s-Polarisation, die damit später bei der Detektion unterscheidbar sind (vgl. Fig. 4a). Nach dieser Aufbereitung der ersten Laserpulse 11 werden diese über einen Strahlteiler 46, z.B. einen dichroidischen Farbstrahlfilter, mit den direkt aus dem Laser L2 stammenden zweiten Laserpulsen 12 (Fig. 4b) vereint, wobei der zeitliche Überlapp wiederum über eine geeignete optische Verzögerungsstrecke 15 gewährleistet wird.

Nach der Vereinigung beider Arten von Laserpulsen 11, 12 werden diese analog zum ersten Ausführungsbeispiel nach Figur 1 in das Laserscan-Mikroskop am Hauptstrahlteiler 16 eingekoppelt und über die diversen Optikelemente 20, 22, 24, 26 auf die Probe P gerichtet. Am Ort der Probe P treten nun abwechselnd zwei Situationen auf: Wenn der erste Laserpuls 11 zeitgleich mit einem zweiten Laserpuls 12 auf die Probe P trifft, wird er gemäß dem Effekt des "Stimulated Raman Loss" um einen Betrag di abgeschwächt (siehe hierzu Fig. 4c). Beim nachfolgenden Puls der Laserpulse 11 ergeben sich keine Verluste gemäß "Stimulated Raman Loss", da ja kein zeitgleicher zweiter Laserpuls 12 existiert. Entsprechend besteht das Signal S1, S2, S3 nach dem Herausfiltern der zweiten Laserpulse 12 aus abwechselnd dem durch "Stimulated Raman Loss" abgeschwächten Signal sowie dem nicht abgeschwächten Signal (Fig. 4c). Da aufgrund der gewählten Anordnung diese beiden optischen Signale unterschiedliche Polarisation besitzen, lassen sie sich mit Hilfe eines Polarisationswürfels PBS2 voneinander trennen und in gesonderten Detektoren in elektrische Signale umwandeln.

Nach geeigneter Verzögerung in einem Verzögerungsglied V1 des ersten der beiden Signale erhält man den in Fig. 4d dargestellten Signalverlauf. Nach Differenzbildung der beiden elektrischen Signale im Differenzierglied 40 erhält man ein Differenzsignal Sd entsprechend der Intensität des "Stimulated Raman Loss" als untergrundfreies Signal, das zur Weiterverarbeitung der Bilderzeugungseinheit zur Verfügung gestellt werden kann.

Die notwendige Verzögerung der optischen Signale in den beiden Polarisationsrichtungen p und s kann entweder optisch oder nach der Wandlung der optischen Signale in elektrische Signale elektronisch erfolgen. Die optische Verzögerung ist exemplarisch anhand des die Probe P durchdringenden Lichts veranschaulicht. Bevor das Licht den einen der beiden Detektoren trifft, durchläuft es einen einstellbaren optischen Umweg U1, so dass die beiden optischen Signale zeitgleich in elektrische Signale umgewandelt werden. Besonders vorteilhaft ist es jedoch, wenn man die Verzögerungen elektronisch z. B. durch Verwendung angepasster Kabellängen erreicht. Dies ist exemplarisch anhand des von der Probe P zurückgestreuten Lichts veranschaulicht, wo eine Verzögerung durch eine verlängerte Leitung L erzielt wird.

Besonders vorteilhaft wird die Differenzbildung beider Detektoren dadurch bewerkstelligt, dass hier Fotodioden eingesetzt werden, die direkt gegenläufig miteinander verbunden werden. Bei exaktem zeitlichen Abgleich kompensieren sich die Untergrund-Signal-Ströme und es entsteht ein zum interessierenden Signal proportionaler Nutzstrom. Die beiden Fotodioden sollten im Hinblick auf die Temperatur insoweit stabilisiert werden, dass keine Artefakt-Signale bei Temperaturdrifts erfolgen. Vorteilhaft ist es hier natürlich, die beiden Fotodioden möglichst nahe auf dem gleichen metallischen Träger zu montieren und die elektronischen Wege kurz zu halten.

Neben der exakten zeitlichen Synchronisation der beiden voneinander zu subtrahierenden Signalanteile ist auch ein möglichst exakter Intensitätsabgleich nötig. Dieser kann ebenfalls optisch oder elektronisch erfolgen. Für einen optischen Abgleich eignet sich als Abgleichelement die eingangs beschriebene motorisierte Lambda-Halbe-Platte HWP, evtl. unterstützt durch einen weiteren, deutlich feineren motorisierten Filter, wie z. B. einen feinen Graukeil, einen Neutral-Verlaufsfilter o. ä. Für einen elektronischen Abgleich wird auf die einschlägigen elektronischen Schaltungen verwiesen. Besonders vorteilhaft erfolgt der Abgleich automatisch. In diesem Fall wird entweder bei nicht eingelegter Probe P so abgeglichen, dass auch kein Detektionssignal mehr beobachtet wird. Alternativ wird so abgeglichen, dass das durchschnittliche Signal oder das Minimalsignal bei eingelegter Probe dann einen festen kleinen Wert, vorzugsweise Null hat.

Es ist zu beachten, dass im vorliegenden Beispiel die optische Anordnung so gewählt wurde, dass die beiden Teilpulssequenzen von Laser L1 unterschiedliche Polarisation besitzen, so dass die entstehenden optischen Signale anschließend über Polarisationsstrahlteiler voneinander getrennt werden können. In bestimmten Situationen ist es jedoch vorteilhaft, anstelle von Polarisation andere optische Eigenschaften zu benutzen. Dies kann dann z.B. die Wellenlänge oder aber auchRichtung bzw. Strahlquerschnitt des Laserstrahls sein. Konkret würde dies bedeuten, dass sich die Pulssequenz von Laser L1 aus Teilsequenzen mit unterschiedlicher Wellenlänge, Richtung oder Strahlquerschnitt zusammensetzt. Die Trennung erfolgt dann später mit einem dichroitischen Filter oder einem räumlichen Filter anstelle des Polarisationswürfels PBS.

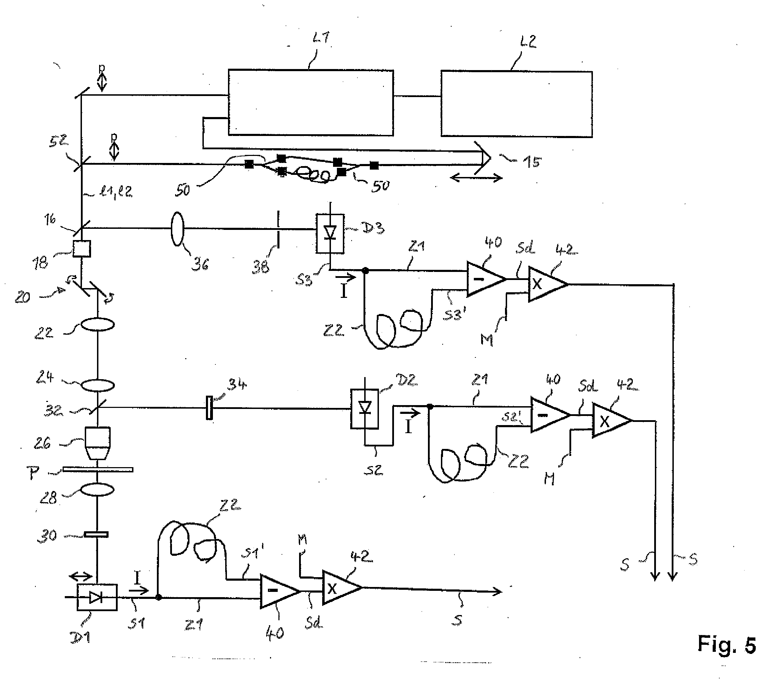

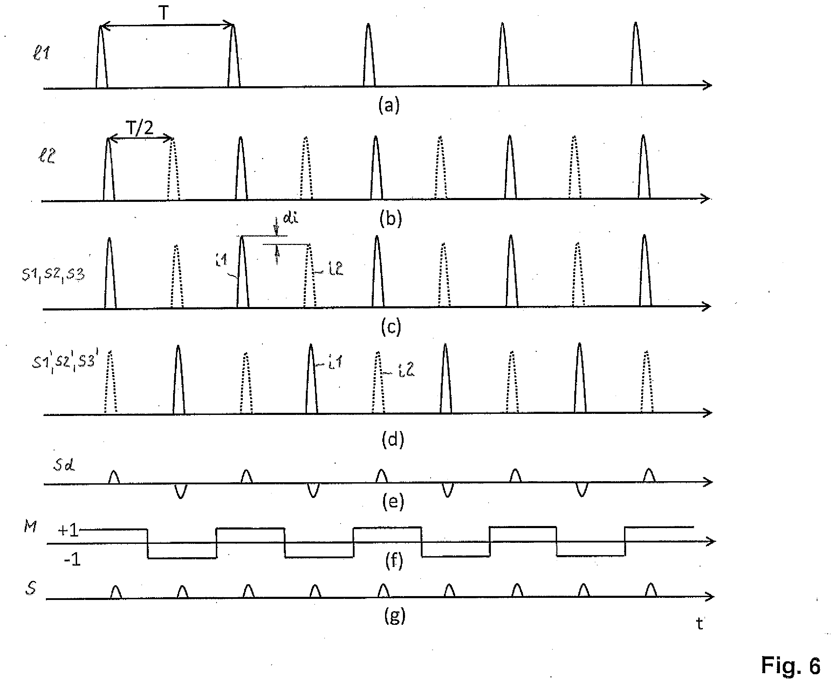

Fig. 5 zeigt ein Ausführungsbeispiel unter Ausnutzung des "Stimulated Raman Gain"-Effekts, das im wesentlichen dem Ausführungsbeispiel nach Figur 1 und 2 für stimulierte Fluoreszenz entspricht, außer dass erster Laserpuls 11 und zweiter Laserpuls 12 exakt gleichzeitig die Probe P erreichen. Als Laser L1 wird bei diesem Ausführungsbeispiel der Signal-Strahl eines OPO (Optisch Parametrischen Oszillators) und als Laser L2 der Idler-Strahl des gleichen OPO benutzt. Die zeitliche Synchronisation erfolgt über eine geeignete Verzögerungsstrecke 15, die z.B. auch faseroptisch realisiert werden kann. Im skizzierten Aufbau wird nun die Pulssequenz des zweiten Lasers L2 verändert (Fig 6b). Dies erfolgt analog wie beim zweiten Ausführungsbeispiel, allerdings wird jetzt auf eine Polarisationsdrehung verzichtet. So werden die beiden Arme eines zweifach vorhandenen Y-Faser-Verbinders 50 mit einer kurzen Faser und einer langgestreckten Faser zum Einstellen einer Verzögerung entsprechend anstelle über einen Polarisator über einen Neutral-Strahlteiler 52 vereint. Dadurch entstehen zwar gewisse Lichtverluste, jedoch treten alle Pulse mit der gleichen Polarisation durch die Optiken auf die Probe. Die Anordnung zur Veränderung der Pulssequenz des zweiten Lasers könnte natürlich wieder aus einer Freistrahloptik mit den entsprechenden Bauteilen wie Strahlteiler (vorzugsweise 50:50), Verzögerungsstrecke und Strahlvereiner (ebenfalls vorzugsweise 50:50) bestehen. Da die entsprechende Realisierung für den Fachmann sofort ersichtlich ist, wurde darauf verzichtet, dies im Detail darzustellen. Stattdessen wird die faseroptische Realisierung desselben Sachverhalts angegeben, die anstelle der Freistrahl-Komponenten die entsprechenden faseroptischen Komponenten wie Faser-Y-Koppler als Strahlteiler/-vereiner und Glasfasern als Verzögerungsstrecke sowie faseroptische Splicings als Verbindungselemente verwendet.

Die Detektion erfolgt wieder wie beim ersten Ausführungsbeispiel. Damit sich die neu in die Pulssequenz eingefügten Pulse tatsächlich in der Mitte der Pulse der Originalsequenz befinden, muss die Verzögerungsstrecke 15 entsprechend lange sein. Um dies in kompakter Bauform realisieren zu können, wird vorzugsweise eine Verzögerungsstrecke 15 auf Glasfaserbasis verwendet. Für den Signalverlauf und die -auswertung wird auf Fig. 6 verwiesen, die im wesentlichen den Figuren 2 und 4 entspricht, so dass die entsprechenden Erklärungen dort zum detaillierteren Verständnis herangezogen werden können.

Die verschiedenen Ausführungsbeispiele sind vielfältig miteinander kombinierbar. So können bei dem Beispiel nach Figur 1 und Figur 3 für die Verzögerungsstrecke 15 ebenfalls Lichtleitfasern verwendet werden. Die beim Beispiel nach Figur 3 beschriebene Erzeugung von Impulsfolgen kann auch für die Beispiele nach Figur 1 oder Figur 5 verwendet werden. Die Gleichrichtung mit Hilfe des Multipliziergliedes 42 kann auch durch eine schnelle Gleichschaltung erfolgen. Die in Figur 3 gezeigte spektrale Detektoreinheit 54 kann auch bei den Beispielen nach Figuren 1 oder 5 eingesetzt werden.

Das Beispiel von Figur 3 kann durch Vertauschen von erstem Laser L1 und zweitem Laser L2 direkt auf die Benutzung von "Stimulated Raman Gain" für die Bildgebung angewandt werden. Entsprechend ist das weiter oben erläuterte Ausführungsbeispiel nach Fig. 5 auch direkt auf "Stimulated Raman Loss" übertragbar. Auch ist das erste Ausführungsbeispiel direkt im Zusammenhang mit den stimulierten Raman-Techniken, allen weiteren skizzierten Techniken wie CARS, FM-CARS etc. sowie noch weiteren Methoden einsetzbar.

## Patentansprüche

1. Optisches Auswertungsverfahren unter Verwendung eines Laserscan-Mikroskops für die Bildgebung mittels stimulierter Fluoreszenz bei der Raman-Technik Stimulated Raman Gain oder Stimulated Raman Loss,
bei dem erste Laserpulse (11) einer ersten Art einer ersten Pulssequenz mit vorbestimmter Repetitionsrate und zweite Laserpulse (12) einer davon unterscheidbaren zweiten Art einer zweiten Pulssequenz mit vorbestimmter Repetitionsrate auf eine zu untersuchende Probe (P) gerichtet werden,
wobei ein erstes pulsförmiges optisches Signal (S1, S1') infolge Wechselwirkung der ersten Laserpulse (11) mit den zweiten Laserpulsen (12) in der Probe (P) bei gleichzeitigem oder zeitnahem Auftreffen der beiden Laserpulse (11, 12) auf der Probe (P) zustande kommt und zu einer Verstärkung oder Abschwächung entsprechend der Raman-Technik Stimulated Raman Gain oder Stimulated Raman Loss führt,
wobei ein zweites pulsförmiges optisches Signal (S2, S2') bei nicht gleichzeitigem oder nicht zeitnahem Auftreffen der Laserpulse (11, 12) auf die Probe (P) zustande kommt und keine Verstärkung oder Abschwächung aufweist, und wobei
nach Detektion der erzeugten optischen Signale mit mindestens einem Detektor (D1, D2, D3) eine elektronische Differenzbildung zwischen dem ersten optischen Signal (S1, S1') und dem zweiten optischen Signal (S2, S2') zu einem pulsförmigen Differenzsignal (Sd) führt, welches einer Bildverarbeitung des Laserscan-Mikroskops zugeführt wird.

2. Optisches Auswertungsverfahren nach Anspruch 1, bei dem die zweiten Laserpulse (12) um eine vorbestimmte Verzögerungszeit (t1) zu den ersten Laserpulsen (11) auf die Probe (P) auftreffen, wobei die zweiten Laserpulse (12) eine kürzere Repetitionszeit als die ersten Laserpulse (11) haben,
die zweiten Laserpulse (12) dem Detektor (D1, D2, D3) zugeführt werden,
die Differenz (di) zwischen einem Puls des zweiten Laserpulses (12) und eines nachfolgenden Pulses des zweiten Laserpulses (12) gebildet wird und diese Differenz (di) bei der Bildverarbeitung ausgewertet wird.

3. Verfahren nach Anspruch 1 oder 2, bei dem als Laserscan-Mikroskop ein konfokales Laserscan-Mikroskop verwendet wird.

4. Einrichtung zum Auswerten von Laserpulsen bei einem Laserscan-Mikroskop für die Bildgebung mittels stimulierter Fluoreszenz bei der Raman-Technik Stimulated Raman Gain oder Stimulated Raman Loss, umfassend
- ein Laserscan-Mikroskop,
- einen ersten Laser (L1), welcher erste Laserpulse (11) einer ersten Art einer ersten Pulssequenz mit vorbestimmter Repetitionsrate erzeugt, und einen zweiten Laser (L2), welcher zweite Laserpulse (12) einer davon unterscheidbaren zweiten Art einer zweiten Pulssequenz mit vorbestimmter Repetitionsrate erzeugt,
- eine Optik, durch die die ersten Laserpulse (11) und die zweiten Laserpulse (12) auf eine zu untersuchende Probe (P) gerichtet werden, wobei ein erstes pulsförmiges optisches Signal (S1, S1') infolge Wechselwirkung der ersten Laserpulse (11) mit den zweiten Laserpulsen (12) in der Probe (P) bei gleichzeitigem oder zeitnahem Auftreffen der beiden Laserpulse (11, 12) auf der Probe (P) zustande kommt und zu einer Verstärkung oder Abschwächung entsprechend der Raman-Technik Stimulated Raman Gain oder Stimulated Raman Loss führt, und wobei ein zweites pulsförmiges optisches Signal (S2, S2') bei nicht gleichzeitigem oder nicht zeitnahem Auftreffen der Laserpulse (11, 12) auf die Probe (P) zustande kommt und keine Verstärkung oder Abschwächung aufweist, und mindestens einen Detektor (D1, D2, D3), eingerichtet zur Detektion der erzeugten optischen Signale (S1, S1', S2, S2'), wobei die Einrichtung eingerichtet ist zur elektronischen Differenzbildung zwischen dem ersten optischen Signal (S1, S1') und dem zweiten optischen Signal (S2, S2'), welche zu einem pulsförmigen Differenzsignal (Sd) führt, welches einer Bildverarbeitung des Laserscan-Mikroskops zugeführt wird.

5. Einrichtung nach Anspruch 4, weiter umfassend eine einstellbare Verzögerungsstrecke (15), welche gewährleistet, dass die zweiten Laserpulse (12) um eine vorbestimmte Verzögerungszeit (t1) zu den ersten Laserpulsen (11) auf die Probe (P) auftreffen, wobei die zweiten Laserpulse (12) eine kürzere Repetitionszeit als die ersten Laserpulse (11) haben, wobei die zweiten Laserpulse (12) dem Detektor (D1, D2, D3) zugeführt werden,
wobei die Einrichtung eingerichtet ist, die Differenz (di) zwischen einem Puls des zweiten Laserpulses (12) und eines nachfolgenden Pulses des zweiten Laserpulses (12) zu bilden und auszuwerten.

6. Einrichtung nach Anspruch 5, bei der das Laserscan-Mikroskop ein konfokales Laserscan-Mikroskop ist.

## Claims

1. An optical evaluation method using a laser scanning microscope for imaging by means of stimulated fluorescence in the Raman technique of stimulated Raman gain or stimulated Raman loss,
in which first laser pulses (11) of a first type of a first pulse sequence with predetermined repetition rate and second laser pulses (12) of a second type that can be distinguished therefrom and of a second pulse sequence with predetermined repetition rate are directed onto a sample (P) to be examined,
wherein a first pulse-shaped optical signal (S1, S1') is generated due to an interaction of the first laser pulses (11) with the second laser pulses (12) in the sample (P) given a simultaneous incidence or an incidence within a very short time lag of the two laser pulses (11, 12) on the sample (P), and results in a gain or a loss in accordance with the Raman technique of stimulated Raman gain or stimulated Raman loss,
wherein a second pulse-shaped optical signal (S2, S2') is generated when both laser pulses (11, 12) are not incident on the sample (P) simultaneously or within a very short time lag and does not have a gain or loss, and wherein
after detection of the generated optical signals with at least one detector (D1, D2, D3) an electronic difference formation between the first optical signal (S1, S1') and the second optical signal (S2, S2') results in a pulse-shaped difference signal (Sd) that is fed to an image processing of the laser scanning microscope.

2. The optical evaluation method according to claim 1, in which the second laser pulses (12) are incident on the sample (P) delayed by a predetermined delay time (t1) with respect to the first laser pulses (11), the second laser pulses (12) having a shorter repetition rate than the first laser pulses (11),
the second laser pulses (12) are fed to the detector (D1, D2, D3),
the difference (di) between a pulse of the second laser pulse (12) and a following pulse of the second laser pulse (12) is formed and this difference (di) is evaluated during image processing.

3. The method according to claim 1 or 2, in which a confocal laser scanning microscope is used as a laser scanning microscope.

4. An apparatus for evaluating laser pulses in a laser scanning microscope for imaging by means of stimulated fluorescence in the Raman technique of stimulated Raman gain or stimulated Raman loss, comprising
- a laser scanning microscope,
- a first laser (L1) which generates first laser pulses (11) of a first type of a first pulse sequence with a predetermined repetition rate, and a second laser (L2) which generates second laser pulses (12) of a second type that can be distinguished therefrom and of a second pulse sequence with predetermined repetition rate,
- an optical system by which the first laser pulses (11) and the second laser pulses (12) are directed onto a sample (P) to be examined, wherein a first pulse-shaped optical signal (S1, S1') is generated due to an interaction of the first laser pulses (11) with the second laser pulses (12) in the sample (P) given a simultaneous incidence or an incidence within a very short time lag of the two laser pulses (11, 12) on the sample (P), and results in a gain or a loss in accordance with the Raman technique of stimulated Raman gain or stimulated Raman loss, and wherein a second pulse-shaped optical signal (S2, S2') is generated when both laser pulses (11, 12) are not incident on the sample (P) simultaneously or within a very short time lag and does not have a gain or loss, and at least one detector (D1, D2, D3) configured to detect the generated optical signals (S1, S1', S2, S2'), the apparatus being configured for an electronic difference formation between the first optical signal (S1, S1') and the second optical signal (S2, S2') resulting in a pulse-shaped difference signal (Sd) that is fed to an image processing of the laser scanning microscope.

5. The apparatus according to claim 4, further comprising an adjustable delay stage (15) that guarantees that the second laser pulses (12) are incident on the sample (P) delayed by a predetermined delay time (t1) with respect to the first laser pulses (11), wherein the second laser pulses (12) have a shorter repetition rate than the first laser pulses (11), wherein the second laser pulses (12) are fed to the detector (D1, D2, D3),
wherein the apparatus is configured to form and evaluate the difference (di) between a pulse of the second laser pulse (12) and a following pulse of the second laser pulse (12).

6. The apparatus according to claim 5, in which the laser scanning microscope is a confocal laser scanning microscope.

## Revendications

1. Procédé d'interprétation optique en utilisant un microscope à balayage laser pour l'imagerie au moyen de la fluorescence stimulée lors de l'amplification de Raman stimulée ou de l'affaiblissement de Raman stimulé de la technique de Raman,
avec lequel des premières impulsions laser (11) d'un premier type ayant une première séquence d'impulsions avec une fréquence de répétition prédéterminée et des deuxièmes impulsions laser (12) d'un deuxième type différentiable de celui-ci ayant une deuxième séquence d'impulsions avec une fréquence de répétition prédéterminée sont dirigées sur un échantillon (P) à examiner,
un premier signal optique (S1, S1') de forme impulsionnelle se produisant du fait de l'interaction des premières impulsions laser (11) avec les deuxièmes impulsions laser (12) dans l'échantillon (P) avec incidence simultanée ou rapprochée dans le temps des deux impulsions laser (11, 12) sur l'échantillon (P) et donnant lieu à une amplification ou un affaiblissement conformément à l'amplification de Raman stimulée ou de l'affaiblissement de Raman stimulé de la technique de Raman,
un deuxième signal optique (S2, S2') de forme impulsionnelle se produisant en cas d'incidence non simultanée ou non rapprochée dans le temps des impulsions laser (11, 12) sur l'échantillon (P) et ne présentant aucune amplification ni aucun affaiblissement, et
après la détection des signaux optiques générés avec au moins un détecteur (D1, D2, D3), une formation de différence électronique entre le premier signal optique (S1, S1') et le deuxième signal optique (S2, S2') donnant lieu à un signal différentiel (Sd) de forme impulsionnelle, lequel est acheminé à un système de traitement d'images du microscope à balayage laser.

2. Procédé d'interprétation optique selon la revendication 1, avec lequel les deuxièmes impulsions laser (12) sont incidentes sur l'échantillon (P) avec un temps de retard (t1) prédéterminé par rapport aux premières impulsions laser (11), les deuxièmes impulsions laser (12) ayant un temps de répétition plus court que celui des premières impulsions laser (11),
les deuxièmes impulsions laser (12) étant acheminées au détecteur (D1, D2, D3),
la différence (di) entre une impulsion de la deuxième impulsion laser (12) et une impulsion qui suit de la deuxième impulsion laser (12) étant formée et cette différence (di) étant interprétée lors du traitement d'image.

3. Procédé selon la revendication 1 ou 2, avec lequel le microscope à balayage laser utilisé est un microscope à balayage laser confocal.

4. Dispositif d'interprétation d'impulsions laser dans le cas d'un microscope à balayage laser pour l'imagerie au moyen de la fluorescence stimulée lors de l'amplification de Raman stimulée ou de l'affaiblissement de Raman stimulé de la technique de Raman, comprenant
- un microscope à balayage laser,
- un premier laser (L1), qui génère des premières impulsions laser (11) d'un premier type d'une première séquence d'impulsions avec une fréquence de répétition prédéterminée, et un deuxième laser (L2), qui génère des deuxièmes impulsions laser (12) d'un deuxième type différentiable de celui-ci d'une deuxième séquence d'impulsions avec une fréquence de répétition prédéterminée,
- une optique, par laquelle les premières impulsions laser (11) et les deuxièmes impulsions laser (12) sont dirigées sur un échantillon (P) à examiner, un premier signal optique (S1, S1') de forme impulsionnelle se produisant du fait de l'interaction des premières impulsions laser (11) avec les deuxièmes impulsions laser (12) dans l'échantillon (P) avec incidence simultanée ou rapprochée dans le temps des deux impulsions laser (11, 12) sur l'échantillon (P) et donnant lieu à une amplification ou un affaiblissement conformément à l'amplification de Raman stimulée ou de l'affaiblissement de Raman stimulé de la technique de Raman, et un deuxième signal optique (S2, S2') de forme impulsionnelle se produisant en cas d'incidence non simultanée ou non rapprochée dans le temps des impulsions laser (11, 12) sur l'échantillon (P) et ne présentant aucune amplification ni aucun affaiblissement, et au moins un détecteur (D1, D2, D3), conçu pour la détection des signaux optiques (S1, S1', S2, S2') générés, le dispositif étant conçu pour la formation d'une différence électronique entre le premier signal optique (S1, S1') et le deuxième signal optique (S2, S2'), laquelle donne lieu à un signal différentiel (Sd) de forme impulsionnelle qui est acheminé à un système de traitement d'images du microscope à balayage laser.

5. Dispositif selon la revendication 4, comprenant en outre une ligne de retard (15) réglable, laquelle garantit que les deuxièmes impulsions laser (12) sont incidentes sur l'échantillon (P) avec un temps de retard (t1) prédéterminé par rapport aux premières impulsions laser (11), les deuxièmes impulsions laser (12) ayant un temps de répétition plus court que celui des premières impulsions laser (11), les deuxièmes impulsions laser (12) étant acheminées au détecteur (D1, D2, D3),
le dispositif étant conçu pour former et interpréter la différence (di) entre une impulsion de la deuxième impulsion laser (12) et une impulsion qui suit de la deuxième impulsion laser (12).

6. Dispositif selon la revendication 5, avec lequel le microscope à balayage laser utilisé est un microscope à balayage laser confocal.
